# DEMANDE DE BREVET EUROPEEN

(11) **EP 3 825 882 A1**
(43) Date de publication de la demande: **26.05.2021**
(21) Numéro de dépôt: 19306487.0
(22) Date de dépôt: 19.11.2019
(51) Int. Cl.: G06F 21/45, H04L 9/32, H04L 29/06

(54) **PROCEDE ET SYSTEME POUR LE PROVISIONNEMENT OU REMPLACEMENT SECURISE D'UN SECRET DANS AU MOINS UN DISPOSITIF DE COMMUNICATION PORTABLE**

(71) Demandeur: THALES DIS FRANCE SA, 92190 Meudon (FR)
(72) Inventeur: ROUBINET, Gregory, 13881 Gémenos Cedex (FR); DELHOSTE, Fabrice, 13881 Gémenos (FR); PETIT, Sébastien, 13881 Gémenos Cedex (FR)
(74) Mandataire: Milharo, Emilien

(57) **Abrégé**

L'invention concerne un procédé pour provisionner un nouveau secret (11, NEW_TOK) ou remplacer un premier secret (1) par ledit nouveau secret (11, NEW_TOK) dans un système de communication (12) comprenant :
- au moins un terminal client (13),
- un serveur d'authentification (15, 15A) et un serveur de provisionnement (14, 14A) de secret,
- un second secret (2) mémorisé au préalable dans ledit terminal et ledit serveur d'authentification,
ledit système étant configuré pour effectuer un provisionnement d'un nouveau secret (11, NEW_TOK) dans ledit terminal client (13) et/ou ledit serveur d'authentification (15, 15A) ;
Le procédé est caractérisé en ce que ledit nouveau secret (11, NEW_TOK) est provisionné (E16) ou remplace ledit premier secret 1, en étant préalablement chiffré (11bis) avec une clé de chiffrement (3) calculée avec ou étant basée sur ledit second secret (2).

L'invention concerne également le système correspondant.

## Description

### Domaine de l'invention.

L'invention concerne un procédé pour provisionner un nouveau secret, remplacer ou renouveler un premier secret par le nouveau secret dans au moins un dispositif de communication portable d'un système de communication.

Les systèmes de communication peuvent comprendre des systèmes d'authentification, logiciels ou matériels, des systèmes de type client/serveur ou toute paire d'entités informatiques de communication apte à communiquer avec une autre entité.

Les systèmes peuvent comprendre tout particulièrement et de préférence au moins un terminal client et un serveur informatique. Le serveur peut comprendre un serveur d'authentification et un serveur de provisionnement de secrets.

L'invention peut concerner en particulier des applications logicielles pour téléphone portable ou de tout terminal client ou toute entité informatique mettant en œuvre (ou participant à) une phase d'authentification sur la base d'un secret partagé entre un terminal, notamment de type client et un serveur d'authentification (ou une entité informatique quelconque mettant en œuvre une phase d'authentification).

A titre d'exemple, pour mettre en œuvre le procédé de l'invention, un terminal client peut même inclure différents équipements tels qu'un token USB ou une carte à puce, un ordinateur, un terminal de paiement (POS), tout dispositif informatique ou intelligent de communication. L'entité informatique distante en communication avec le terminal peut être un autre terminal intelligent ou un ordinateur doté d'un logiciel d'authentification ou de vérification d'un chiffrement basé sur ledit secret partagé avec le terminal.

Au cours de la mise en œuvre d'applications logicielle de fournisseurs de services, notamment bancaires, à distance ou en ligne via un téléphone mobile (mbanking), il est généralement prévu une phase ou étape authentification sécurisée qui utilise un secret partagé (ou clé secrète ou graine digitale). Ce secret peut être actuellement échangé entre un serveur de provisionnement (ou autre entité informatique) et le téléphone portable (ou tout terminal client) au cours de la première utilisation de l'application logicielle notamment lors d'une phase d'initialisation ou d'enrôlement préalable.

Puis quand un utilisateur veut accéder à ces services en ligne via l'application logicielle, il doit s'authentifier auprès des services (ou bureaux en ligne) du fournisseur de service (exemple la banque ou serveur lié à la banque) via l'application du téléphone portable (ou tout autre terminal client).

Le secret est généralement utilisé pour calculer un OTP (numéro à usage unique : One-time-password en anglais) ou autre moyen d'authentification. Cet OTP est envoyé au serveur (ou autre entité) du fournisseur de service (ex. la banque) pour le vérifier grâce au secret partagé et un algorithme de vérification à disposition du serveur et valider la phase d'authentification.

### Art antérieur.

On connait notamment des solutions matérielles et / ou logicielles d'authentification comprenant des serveurs d'authentification comprenant des modules HSM (hardware sécurité module en anglais) dont la fonction standardisée est d'effectuer des calculs cryptographiques du type OTP à des fins d'authentification ou validation pour notamment effectuer des connexions électroniques de téléphone portable.

Il existe toutefois aussi des solutions purement logicielles d'authentification équipant toute sorte d'entité informatique.

Les HSM précités fonctionnent généralement comme ci-après : Des clés secrètes (secrets ou graines) liées à la génération ou vérification d'OTPs sont échangées de façon sécurisée avec les terminaux clients des utilisateurs puis ces clés sont mémorisées en base de données (HSM) du serveur d'authentification, généralement sous forme chiffrée par un autre secret généré et connu uniquement par le HSM.

Lors de la vérification, par exemple d'un OTP, le serveur d'authentification demande au HSM de déchiffrer la clé correspondante pour effectuer le calcul inverse dit de vérification de l'OTP puis renvoie le résultat pour valider ou non une authentification.

### Problème technique.

De plus en plus de banques (ou autre fournisseur de services en ligne) s'appuient sur des mécanismes de numéros à usage unique « OTP » (One-Time-Password en anglais) pour sécuriser leurs transactions digitales (ou électroniques). Cela se produit notamment dans le domaine bancaire (eBanking ou mbanking en anglais). Les valeurs OTP sont calculées par l'application logicielle d'un mobile (ou d'un terminal quelconque) à l'aide d'une clé secrète (ou secret) partagée puis ces valeurs sont vérifiées par la banque (en arrière-plan) grâce à un serveur d'authentification (ou autre entité intelligente configurée pour authentifier).

Cette clé secrète (ou secret) partagée est souvent échangée en toute sécurité pendant le processus d'enrôlement de l'utilisateur et stockée dans une zone mémoire protégée dédiée à l'application logicielle du terminal. Dans cette configuration, le secret ou la clé secrète partagée est seulement connue de l'application mobile (ou du terminal) et du serveur d'authentification (ou autre entité) du fournisseur de services en ligne (ex. la banque en arrière-plan).

Chaque clé secrète (ou secret) partagée d'un utilisateur enrôlé avec son terminal est différente de celles des autres utilisateurs pour garantir une sécurité.
Cependant, pour différentes raisons, le secret du terminal client a besoin d'être remplacé par un nouveau secret. Par exemple, une mise à jour avec un nouveau système d'exploitation ne permet pas le recours au secret ou a effacé le secret ou le secret doit être renouvelé pour conserver la sécurité.

Le secret peut être piraté par un cheval de Troyes ou une attaque de l'homme du milieu (man-in-the middle en anglais) par exemple dans un navigateur informatique du terminal-client.

Alternativement, on peut avoir besoin de provisionner un nouveau secret dans le terminal ne serait-ce, par exemple, pour activer une sécurité optionnelle souhaitée par un utilisateur pour ses transactions en ligne.

Le provisionnement de secret passe actuellement par une phase d'enrôlement qui peut être peu pratique ou longue ou contraignante pour l'utilisateur.

### Objectif de l'invention.

L'invention a notamment pour objectif de résoudre les inconvénients ou besoins susvisés.

L'invention propose un procédé ou système de provisionnement, renouvellement ou remplacement de secret (ou clé secrète) pour application logicielle de tout terminal notamment de téléphone portable qui soit plus sécurisé et plus pratique qu'à l'heure actuelle.

### Résumé de l'invention.

A cet effet, l'invention a pour objet un procédé pour provisionner un nouveau secret ou remplacer un premier secret par ledit nouveau secret dans un système de communication comprenant :
- au moins un terminal client,
- un serveur d'authentification et un serveur de provisionnement de secrets,
- un second secret mémorisé au préalable dans ledit terminal et ledit serveur d'authentification,
ledit système étant configuré pour effectuer un provisionnement d'un nouveau secret dans ledit terminal client et/ou ledit serveur d'authentification ;
Le procédé se distingue en ce que ledit nouveau secret est provisionné en étant préalablement chiffré avec une clé de chiffrement calculée avec ou étant basée sur ledit second secret.

Selon d'autres caractéristiques, du procédé :
- Ladite clé de chiffrement peut être de préférence calculée ou fournie à partir d'un mot de passe à usage unique (OTP_TOK_FS) ou autre moyen de vérification) généré et fourni par ledit serveur d'authentification ; Ce mot de passe à usage unique (OTP_TOK_FS) (ou cet autre moyen de vérification) est de préférence calculé sur la base du second secret partagé ou selon une règle de calcul ou méthode partagée ;
- Un challenge (RC) peut être associé au nouveau secret, ledit challenge (RC) étant utilisé dans ledit serveur d'authentification ou terminal client pour générer ou fournir ledit mot de passe à usage unique (OTP_TOK_FS);
- Le challenge (RC) provenant du serveur d'authentification peut être reçu dans ledit terminal-client et utilisé en réponse pour récupérer ledit nouveau secret chiffré à partir du serveur de provisionnement ;
L'invention a l'avantage de réutiliser une partie de procédure ou infrastructure d'enrôlement et de provisionnement déployée.
- La clé de chiffrement peut être également calculée dans ledit terminal-client, avec ou étant basée sur ledit deuxième secret partagé dans ledit terminal-client afin de déchiffrer ledit nouveau secret chiffré et obtenir ledit nouveau secret.

L'invention concerne également le système correspondant au procédé, selon la revendication 9.

L'invention possède les avantages ci-après. La clé de chiffrement assure la sécurité du transport du nouveau secret et peut être calculée par chacun des participants (serveur d'authentification et terminal-client), sa sécurité n'est donc pas dépendante du canal de transport du nouveau secret. Coté terminal-client le mécanisme d'authentification de l'utilisateur (PIN code par exemple), peut intervenir dans le calcul de cette clé de chiffrement afin de lier de manière forte l'authentification et l'import du nouveau secret.

Le PIN code de l'utilisateur est utilisé localement (par rapport à une solution où le PIN peut circuler sur le réseau pour un enrôlement et un provisionnement de secret ou graine digitale) et la nouvelle graine (digitale) peut être protégée par une graine temporelle générée localement, ce qui permet de déjouer une attaque informatique du type "homme du milieu" (MitM) permettant un piratage aux messages non chiffrés.
Même avec une attaque MitM complète entre le mobile et la banque ce mécanisme de renouvellement clé présente plus de sécurité.

En outre, il y a moins de contrainte lors d'un renouvellement clé pour l'utilisateur ainsi qu'une amélioration de la sécurité.

Les solutions proposées de l'invention peuvent avantageusement être également déployées pour l'entreprise, l'authentification des citoyens, etc...

### Brève description des figures.

- La figure 1 illustre des étapes d'un procédé selon un mode générique de l'invention pour provisionner un nouveau secret ou pour remplacer un premier secret 1 par un nouveau secret 11 dans un système de communication conforme à l'invention ;
- La figure 2 illustre un système conforme à un mode particulier de réalisation et/ou mise en œuvre particulier du procédé de l'invention selon un exemple préféré.

### Description.

Au sens de l'invention un secret peut être toute information numérique, connue seulement par le serveur terminal et le serveur d'authentification par exemple une clé de chiffrement ou d'authentification, (graine digitale, clé, jeton digital ou numérique (token ou seed en anglais).

Par transaction on entend un échange de données entre deux entités logiques ou matérielles. Elle peut être à différentes fins, notamment à des fins de connexion à un service ou d'accès logique ou physique, ou de transaction financières, paiement, enrôlement, enregistrement, transfert financiers, échanges de données sensibles...

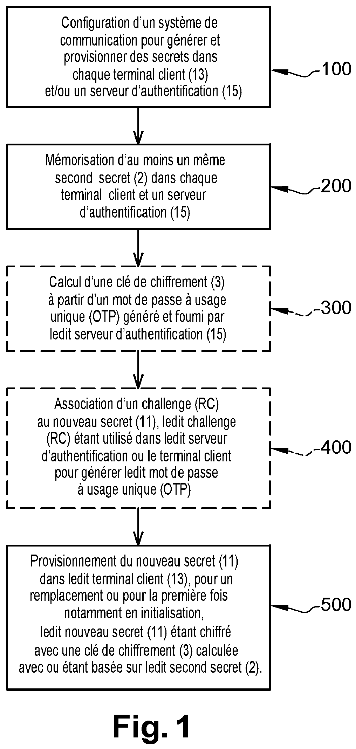

A la figure 1, on va décrire ci-après les différentes interactions ou étapes d'un exemple générique du procédé et/ou système 12 pour provisionner un nouveau secret 11 ou remplacer un premier secret 1 par le nouveau secret dans un système de communication. Le système 12 comprend au moins un terminal client 13, 13A, 13B, un serveur d'authentification 15, 15A et un serveur de provisionnement EPS 14, 14A. Ce dernier serveur EPS 14, 14A peut être notamment conforme ou similaire au serveur EZIO EPS, développé par GEMALTO. Ce serveur assure les fonctions d'enrôlement et de provisionnement au sein d'un système permettant aux utilisateurs en possession d'une application sur smartphone développée à partir du SDK Mobile Protector de s'authentifier auprès d'un service tiers (serveur bancaire notamment) ou de signer des transactions.

Une couche d'orchestration (ou de gestion, management) 15A est comprise dans ou est relié au serveur d'authentification. Il peut être sous forme d'une couche logicielle ou d'un module matériel et logiciel de gestion ou de management pour gérer ou manager différents dispositifs ou terminaux clients pour les enrôler et les gérer.

Alternativement, le serveur d'authentification 15, 15A et le serveur de provisionnement (14, 14A) peuvent être fusionnés ensemble ou l'un faisant partie de l'autre. Les deux serveurs peuvent en fait constituer une entité informatique configurée pour communiquer avec chaque terminal 13, 13A, 13B.

Le terminal client 13, 13A, 13B est ici de préférence un téléphone portable, mais peut concerner d'autres terminaux clients, tels qu'un assistant personnel, une tablette, un terminal de paiement, tout dispositif de communication sans fil. Le terminal peut comporter un kit 13B de développement logiciel (SDK) du mobile ou terminal 13; Le kit 13B est configuré pour notamment générer un OTP à partir d'un secret 2. Le secret 2 peut être mémorisé avec des mesures de sécurité dans le terminal ou plus précisément dans l'application logicielle SDK, 13, grâce notamment à des techniques cryptographiques notamment WBC (White Box Cryptography en anglais).

Le serveur d'authentification 15, 15A peut comporter un HSM et le serveur de provisionnement de secret ou de clés peut être lié au serveur d'authentification 15, 15A. Le système peut être dédié au domaine bancaire. L'ensemble 14, 14A, 15, 15A peut constituer une entité quelconque informatique communicante configurée avec les mêmes logiciels (ou mêmes fonctions) que ceux de l'ensemble.

Les serveurs d'authentification 15, 15A comprenant des modules HSM (hardware sécurité module en anglais) ont une fonction standardisée d'effectuer des calculs cryptographiques du type OTP à des fins d'authentification ou validation pour effectuer des connexions électroniques. L'invention peut viser des structures et des fonctions d'HSM et/ou de serveur d'authentification connus de l'homme de l'art, avec les commandes plus ou moins standardisées ou recommandées. Leur structure ou fonctions peuvent conformes à celles des HSM ou serveurs d'authentification de la société Thales tels que « SafeNet Luna Network HSM » ou « Thales Payshield 9000 ».

Ces HSM fonctionnent généralement comme ci-après : Des clés secrètes liées à la génération ou vérification d'OTPs sont échangées de façons sécurisées avec les terminaux-clients des utilisateurs puis sont mémorisées en base de données (HSM) du serveur d'authentification, généralement sous forme encryptée par un autre secret généré et connu uniquement par le HSM. Lors de la vérification, par exemple d'un OTP, le serveur d'authentification demande au HSM de décrypter la clé correspondante pour effectuer le calcul de vérification de l'OTP puis renvoie le résultat pour permettre ou non une connexion.

Le système 12 comporte un ensemble de terminaux clients et chaque terminal comporte une application logicielle 13A d'un fournisseur de service offrant un service sur le web ou autre service à distance via un réseau de télécommunication. Ici dans l'exemple, l'application du terminal permet notamment une connexion bancaire ;

Le procédé peut comporter les étapes préférentielles ci-après :
- A l'étape 100, le procédé prévoit au préalable de configurer le système 12 pour qu'il puisse générer et provisionner des secrets (ou du moins un nouveau secret 11, NEW_TOK) dans chaque terminal-client 13, 13A et/ou ledit serveur d'authentification 15, 15A.

Chaque terminal client comprend, selon un mode de réalisation préféré, au moins un secret 2 (nommé second secret) mémorisé dans une mémoire non volatile prédéterminée ou pas; Le terme secret au sens de l'invention peut équivaloir graine, graine digitale, clé, jeton digital ou numérique (token en anglais) dans toute la présente description et chaque terme peut être utilisé indifféremment à la place de l'autre. Dans le cas d'un renouvellement, un terminal peut comprendre également un premier secret 1.
Ces seconds secrets peuvent avoir été introduits préalablement par tout moyen connu (téléchargement, enrôlement, personnalisation...), ou manuellement par un utilisateur ou opérateur.

De même, le serveur d'authentification 15 comprend dans une mémoire prédéterminée non volatile, le même second secret spécifique au terminal. Le serveur 15 comporte ainsi dans le mode de réalisation préféré une multitude de seconds secrets différents les uns des autres pour un ensemble de terminaux associés au serveur.

Alternativement, en généralisant, chaque terminal peut être apparié à une entité informatique et partage un second secret.

Le cas échéant, dans le cas d'une opération ou phase de renouvellement de secret, le serveur d'authentification (ou toute autre entité informatique) peut comporter également un premier secret 1 (à remplacer par un nouveau secret 11).

Le second secret permet avantageusement comme décrit ci-après d'effectuer un renouvellement du premier secret 1 en sécurité (par exemple en cas d'obsolescence du premier secret) ou un provisionnement d'un nouveau secret, notamment lors d'un déploiement d'un nouveau service en ligne. Le téléchargement, remplacement ou provisionnement du nouveau secret 11 et/ou son élaboration peuvent utiliser le second secret 2 pour garantir la sécurité comme expliqué ci-après.
- A l'étape 200, ces seconds secrets 2 ont pu être mémorisés au cours d'une initialisation ou installation d'une application d'un fournisseur de service quelconque notamment bancaire ou en mettant en œuvre une fonction de provisionnement du système via un serveur d'enrôlement et/ou de provisionnement 14, 14A. Dans l'exemple, les secrets sont mémorisés, en mettant en œuvre une procédure complexe. Cette procédure peut mettre en œuvre un processus long d'échange de données notamment par courrier, ou via tout canal de communication.

A l'étape 500 ensuite, selon une caractéristique du mode de mise en œuvre générique de l'invention, le procédé peut effectuer un provisionnement du nouveau secret 11 dans ledit terminal client ou un remplacement du premier secret 1 (les étapes 300-400 étant non essentielles); Ce nouveau secret est avantageusement préalablement chiffré avec une clé de chiffrement 3 calculée avec ou étant basée sur ledit second secret 2.

Ainsi, grâce à ce chiffrement le second secret peut être transmis en sécurité.

A l'étape 300 optionnelle ou à titre d'exemple préféré, le procédé a pu effectuer un calcul de la clé de chiffrement 3 à partir d'un (ou basé sur un) mot de passe à usage unique (OTP 5) généré et fourni par le serveur d'authentification 15 (ou alternativement pour généraliser, toute entité informatique associée); Cet OTP peut avoir été calculé avantageusement pour plus de sécurité en utilisant le second secret 2 ;

Alternativement, le calcul de la clé de chiffrement 3 peut être effectué à partir d'une (ou basé sur une) variable générée et fourni par ledit serveur d'authentification (ou toute entité informatique pour généraliser). Cette variable peut être transmise par le serveur d'authentification au terminal de manière à effectuer un calcul identique ou similaire afin de retrouver la clé 3 et déchiffrer le nouveau secret.

Alternativement, la variable peut être calculée selon une méthode dont la connaissance est partagée entre le terminal et le serveur d'authentification.

Alternativement, un jeu de variables pré mémorisées dans chaque terminal et le serveur d'authentification (en relation avec chaque terminal) peut être utilisé dans un ordre pré établi partagé.

La préférence est donnée à la génération d'une variable notamment sous forme d'OTP ; Le système peut avoir prévu cette fonction et être déjà déployée par ailleurs notamment pour un service d'authentification de l'utilisateur à l'aide de son terminal. Avantageusement, l'invention peut prévoir de réutiliser la variable (notamment OTP) à une fin différente de l'authentification, en l'occurrence pour le transport sécurisé de secret par chiffrement de ce dernier.

Ainsi, la fonction de génération d'OTP peut avoir une finalité autre qu'une authentification. Dans l'invention, elle sert au final à générer un OTP destiné à chiffrer un secret pour son transfert (et/ou mémorisation) sécurisé dans le cadre d'un renouvellement d'un premier secret 1 par un nouveau secret 11 ou provisionnement d'un nouveau secret 11 ou des secret(s) préétablis, au moins dans le terminal.

Le nouveau secret 11 peut être chiffré avec une clé de transport plus classique via un protocole de communication sécurisé SSL, TLS , notamment par le serveur de provisionnement et/ou d'enrôlement EPS pour être transmis, provisionné ou envoyé au serveur d'authentification 15.
- A l'étape 400 optionnelle ou à titre d'exemple, le procédé peut associer un challenge RC au nouveau secret 11 ; Ce challenge même RC peut avoir été utilisé dans le serveur d'authentification (ou autre entité informatique pour généraliser) ou également dans le terminal-client pour générer le mot de passe à usage unique (OTP 5) ; Cet OTP peut être utilisé comme indiqué à l'étape 300 pour chiffrer un transport sécurisé (ou transmission sécurisé) du nouveau secret de remplacement (ou de renouvellement).

Ainsi, on comprend l'avantage de l'invention dans la sécurisation du renouvellement de premier secret 1 par un nouveau 11 ou de provisionnement d'un nouveau secret 11 en phase initiale.

Selon une autre caractéristique, on peut utiliser un mot de passe à usage unique de longueur complète (OTP 5) pour calculer ladite clé de chiffrement (3). Ainsi, la clé de chiffrement peut être plus difficile à casser par un hacker ou fraudeur.

Selon une alternative préférée, un challenge (RC) peut être associé au nouveau secret 11 généré dans le serveur EPS. Le challenge RC peut être utilisé (notamment sous forme d'un aléa) dans ledit serveur d'authentification 15 ou terminal-client 13 pour générer le mot de passe à usage unique (OTP 5).

Le challenge (RC) provenant du serveur d'authentification (15) peut être reçu dans ledit terminal-client et utilisé en réponse pour récupérer le nouveau secret chiffré llbis à partir du serveur de provisionnement 14, 14A.

La clé de chiffrement 3 peut être également calculée dans ledit terminal-client 13, avec ou étant basé sur le deuxième secret 2 partagé dans ledit terminal-client afin de déchiffrer le nouveau secret 11 sous forme chiffrée llbis et obtenir ledit nouveau secret 11.

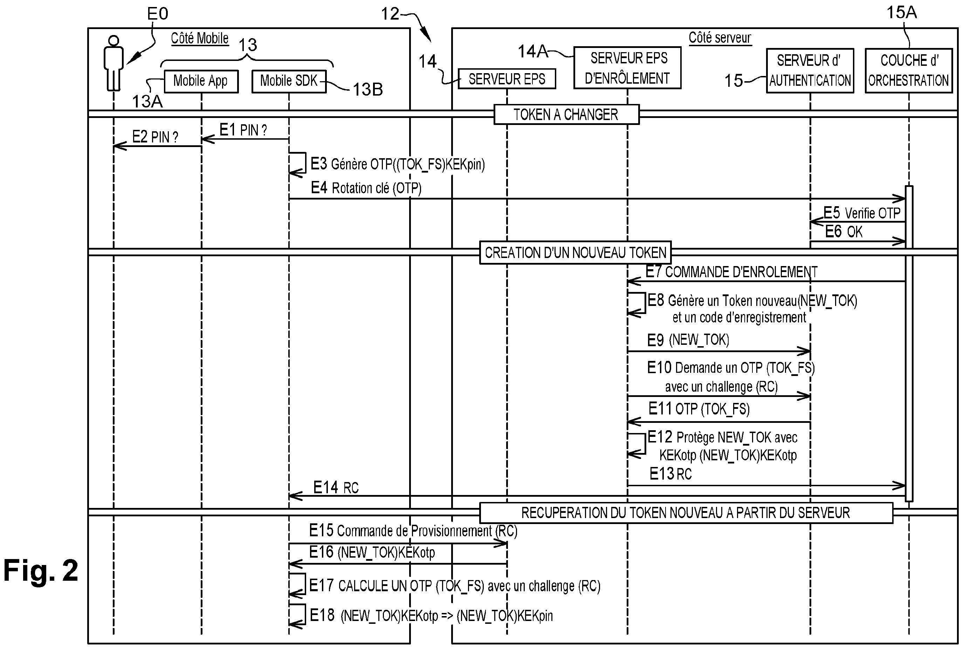

A la figure 2, on va décrire maintenant un système 12 conforme à un mode particulier de réalisation et/ou de mise en œuvre particulier du procédé de l'invention selon un exemple préféré.

Alternativement, le système 12 de la figure 2 peut comprendre au moins des entités informatiques mentionnées précédemment.
Une entité informatique communicante selon l'invention peut être tout appareil ou dispositif intelligent à microcontrôleur et interface de communication via un réseau de communication quelconque.

Les alternatives ou fonctions, hardware ou software décrites en relation avec la figure 1 peuvent s'appliquer ou être utilisées pour la description en relation à la figure 2 et inversement.

Dans tous les exemples ou modes de réalisation, l'ensemble des serveurs peuvent être remplacés par une entité informatique configurée pour communiquer avec un terminal associé.

### Phase de détection d'un besoin de renouvellement de secret.

En étape préliminaire, un besoin de renouvellement ou de provisionnement initial de secret est détecté notamment suite à un problème de sécurité ou périodiquement par mesure de sécurité.

Dans l'exemple, l'utilisateur E0 a besoin de s'authentifier au cours d'une opération de transaction quelconque sur internet, par exemple avec un serveur de sa banque. Comme la graine normale (TOK ou le premier secret 1) est considéré par le système 12 comme non sécurisée, obsolète, cassée ou désactivée ou effacée, il est nécessaire de la remplacer par une nouvelle graine (ou nouveau secret 11).

Alternativement, un besoin de provisionnement initial de secret (à usage notamment d'authentification, connexion, transaction, permettre un service en ligne en toute sécurité etc...) peut être exprimé notamment par l'utilisateur afin d'utiliser un service en ligne, notamment bancaire, associé à une application de son mobile.

L'initiative du remplacement du secret 1 par un nouveau secret 11 (ou de provisionnement initial d'un nouveau secret 11, sans existence préalable d'un premier secret 1 dans le terminal et/ou serveur 15, 15A), dans le système, peut venir, par exemple de l'application SDK ou du serveur d'authentification, (notamment un serveur 15A ou une couche logicielle d'orchestration 15A du serveur d'authentification 15).

L'invention propose de remplacer un premier secret 1 préalablement mémorisé (à usage notamment d'authentification, ...) et utilisé par le terminal client, (ou de provisionner pour la première fois dans le terminal un nouveau secret (également à usage notamment d'authentification) qui sera utilisé en tant que premier secret par la suite) grâce au recours du second secret 2 (ou jeton) à usage de provisionnement ou de remplacement de nouveau secret 11. Le second secret 2 peut être désigné en tant que secret « de sauvegarde ou de secours» ou de secret sécurisé en cas d'échec. Un échec, par exemple d'authentification, peut avoir été constaté dans le cadre de l'utilisation du premier secret 1.

Ce second secret 2 a pu être mémorisé différemment par rapport au premier secret 1 (ou au nouveau secret 11) et/ou avec un niveau de sécurité supérieur de préférence (ou alternativement moindre) dans le terminal. Ce second secret 2 est mémorisé de la même manière dans toute entité informatique associé.

Dans l'art antérieur, un second secret 2 (de secours) pouvait être stocké dans un terminal et un serveur d'authentification en plus d'un premier secret 1, mais uniquement pour permettre un chiffrement de la transaction et la vérification par les banques en cas de problème d'authentification avec un premier secret 1. Aucune utilisation de ce second secret 2 en vue de sécuriser le transport d'un nouveau secret 11 pour son provisionnement ou remplacement n'a été décrite ou suggérée dans l'art antérieur.
- A l'étape E1 (puis E2 et E3), afin d'utiliser le jeton sécurisé 2 (secret 2 de sauvegarde ou de secours), notamment en cas d'échec avec le premier secret 1, ou en cas de provisionnement initial (première fois) d'un nouveau secret 11 à usage d'authentification, le kit de développement logiciel (SDK, 13B) a besoin d'authentifier l'utilisateur, par exemple via un code PIN d'utilisateur. Le PIN est juste un des exemples d'authentification disponible; Puis à l'étape E2, le code PIN est donc demandé à l'application logicielle 13A du terminal 13 par l'application mobile SDK 13B ; L'application mobile 13A à son tour prompt E2 l'utilisateur E0 de saisir son code PIN ;
   Puis à l'étape E3, l'application 13B, SDK du terminal est configurée pour générer un OTP (OTP_TOK_FS) à l'aide du code PIN fourni par l'utilisateur et le second secret 2 (TOK_FS); Le PIN peut ne pas être essentiel dans le calcul de l'OTP. Cela dépend comment est mémorisé le second secret 2 ;
- A l'étape E4, une requête pour renouveler le secret 1 (ou de rotation de clé 1) est ensuite envoyée à la couche logicielle d'orchestration 15A du serveur d'authentification 15, avec l'OTP du SDK permettant une authentification de l'utilisateur E0;
- A l'étape E5 (puis E6), la couche d'orchestration 15A vérifie l'identité de l'utilisateur auprès du serveur d'authentification 15 avec l'OTP et répond OK à l'étape E6 ;

### Phase de création d'un nouveau secret 11 (jeton ou token NEW_TOK).

- A l'étape E7, la couche d'orchestration 15A envoie une commande d'enrôlement au serveur d'enrôlement EPS 14 et ce dernier génère à l'étape E8 un nouveau secret 11 (ou nouveau jeton_NEW_TOK). Ce nouveau secret 11 peut être de préférence référencé avec un code d'enregistrement (RC) qui peut servir d'aléa dans la suite du procédé.
- A l'étape E9, le nouveau secret (ou jeton) (NEW_TOK) est envoyé au serveur d'authentification 15 par le serveur EPS, (il peut être de préférence protégé (ou chiffré) par une clé de transport TRK pour la transmission ;
   Le nouveau secret 11 peut être chiffré par ledit serveur EPS de provisionnement 14A et/ou un serveur d'enrôlement associé 14 avant d'être provisionné ou envoyé au serveur d'authentification 15.
- A l'étape E10 (puis E11), le serveur d'enrôlement EPS, 14A requiert un OTP calculé à partir du nouveau secret (TOK_FS, 11) avec éventuellement un challenge ou aléa (RC) auprès du serveur d'authentification 15, qui à son tour lui retourne l'OTP résultant OTP(TOK_FS) à l'étape E11;
- A l'étape E12, le serveur d'enrôlement EPS, 14A utilise l'OTP résultant OTP (TOK_FS) pour calculer une clé de chiffrement (KEKotp) . Cette clé est utilisée pour chiffrer le nouveau secret 11 et obtenir (NEW_TOK)KeKotp ou llbis. Cette clé chiffrée llbis ou (NEW_TOK)KeKotp est alors mémorisée dans le serveur de provisionnement 14 ou 14A l'attente d'être réclamée ou récupérée par un terminal 13;
- A l'étape E13, le serveur d'enrôlement EPS, 14A envoie le code (RC) (ou numéro d'enregistrement ou de référence ou aléa) à la couche logicielle d'orchestration 15A (ou couche logicielle de gestion) configurée notamment pour gérer les demandes de renouvellement de secret notamment en relation avec le serveur d'authentification ;
- A l'étape E14, la couche d'orchestration 15A envoi le code (RC) reçu précédemment, dans l'application SDK 13B du terminal 13 ;

### Phase de récupération du nouveau secret du serveur de provisionnement EPS.

- A l'étape E15, l'application SDK 13B du terminal mobile 13 appelle la commande de provisionnement du serveur de provisionnement EPS à l'aide du code ou numéro d'enregistrement (RC) ;
- A l'étape E16, le serveur de provisionnement EPS vérifie la validité du numéro (ou aléa) RC et retourne à l'application 13B du terminal mobile 13 le nouveau secret 11, NEW_TOK sous forme chiffrée llbis ou (NEW TOK)KEKotp à l'aide de la clé KEKotp élaborée à partir de l'OTP utilisant (ou se basant sur) le second secret 2 partagé mémorisé dans le serveur 15 et/ou 15A;
- A l'étape E17, l'application SDK 13B calcule un OTP (identique à celui de l'étape E11) sur la base du secret 2 et avec le numéro RC en tant que challenge ;
- A l'étape E18, l'application SDK 13B utilise l'OTP (TOK_FS) pour calculer une clé de chiffrement ou déchiffrement KEKotp, qui est utilisée pour déchiffrer le nouveau secret chiffré llbis ou (NEW TOK)KEKotp et obtenir le nouveau secret 11 ou NEW_TOK.

Ce secret NEW_TOK ou nouveau secret 11 peut être de préférence conservé sous forme chiffrée llter pour sa mémorisation dans le terminal à l'aide d'une autre clé de chiffrement 21 (KEKpin) dérivée du code PIN de l'utilisateur E0, ce qui permet de mémoriser le nouveau secret 11, NEW_TOK sous une forme facultative chiffrée llter ou (NEW_TOK)KeKpin mais préférentielle pour un peu de plus sécurité dans le terminal.

On remarque que l"étape d'obtention (vérification) du nouveau secret 11 ou NEW_TOK à partir du nouveau secret 11 chiffré (NEW_TOK)KeKotp n'est pas illustrée à l'étape E18. On illustre principalement le résultat de chiffrement du nouveau secret 11 ((NEW_TOK) KEKPIN à l'aide d'une clé obtenu à partir du code PIN.

L'invention vise également une application logicielle de provisionnement d'un nouveau secret 11 ou de remplacement d'un ancien secret 1 par un nouveau secret 11 comprenant des instructions configurées pour exécuter ou correspondant aux étapes E1 à E18 du procédé de l'invention.
Tout ou partie (E2- E4), (E5-E14 et E15-E18) de cette application peut être installée ou chargée respectivement dans l'une 13 ou l'autre entité informatique ou intelligente 14, 15, du système 12 de l'invention.

En utilisation, le serveur ou le terminal peut ne plus contenir le premier secret 1 qui a été effacé, pour contenir uniquement pour contenir uniquement le second secret 2. Le serveur 15 et/ou 15A peut aussi ne plus contenir le premier secret 1 qui a pu être effacé car obsolète ou corrompu pour contenir uniquement le second secret 2 partagé avec le terminal.

## Revendications

1. Procédé pour provisionner un nouveau secret (11, NEW_TOK) ou remplacer un premier secret (1) par ledit nouveau secret (11, NEW_TOK) dans un système de communication (12) comprenant :
- au moins un terminal client (13),
- un serveur d'authentification (15, 15A) et un serveur de provisionnement (14, 14A) de secret,
- un second secret (2) mémorisé au préalable dans ledit terminal et ledit serveur d'authentification,
ledit système étant configuré pour effectuer un provisionnement d'un nouveau secret (11, NEW_TOK) dans ledit terminal client (13) et/ou ledit serveur d'authentification (15, 15A),
**caractérisé en ce que** ledit nouveau secret (11, NEW_TOK) est provisionné (E16) ou remplace ledit premier secret 1, en étant préalablement chiffré (llbis) avec une clé de chiffrement (3) calculée avec ou étant basée sur ledit second secret (2).

2. Procédé selon la revendication précédente, dans laquelle ladite clé de chiffrement (3, KEKotp) est calculée à partir d'un mot de passe à usage unique (OTP_TOK_FS) généré et fourni (E11) par ledit serveur d'authentification (15, 15A).

3. Procédé selon l'une des revendications précédentes, dans laquelle un challenge (RC) est associé (E8) au nouveau secret (11, NEW_TOK), ledit challenge (RC) étant utilisé dans ledit serveur d'authentification (15, 15A) ou terminal client (13) pour générer ou fournir (Ell, E17) ledit mot de passe à usage unique (OTP_TOK_FS).

4. Procédé selon l'une des revendications précédentes, dans laquelle un mot de passe à usage unique de longueur complète (OTP_FS) est utilisé pour calculer ladite clé de chiffrement (3, KEKotp) .

5. Procédé selon l'une des revendications précédentes, dans laquelle ledit nouveau secret (11, NEW_TOK) est chiffré par ledit serveur de provisionnement (14) et/ou un serveur d'enrôlement (14A) associé avant d'être provisionné ou envoyé (E16) au terminal et/ou (E9) au serveur d'authentification (15).

6. Procédé selon l'une des revendications précédentes, dans lequel ledit challenge (RC), provenant du serveur d'authentification (15), est reçu (E14) dans ledit terminal-client et utilisé (E15) en réponse pour récupérer (E16) ledit nouveau secret chiffré (llbis, NEW_TOK_KEKotp) à partir du serveur de provisionnement (14, 14A).

7. Procédé selon l'une des revendications précédentes, dans lequel ladite clé de chiffrement (3, KEKotp) est également calculée (E17) dans ledit terminal-client, avec ou étant basé sur ledit second secret (2) partagé dans ledit terminal-client (13) afin de déchiffrer (E18) ledit nouveau secret chiffré (llbis, NEW_TOK_KEKotp) et obtenir ledit nouveau secret (11, NEW_TOK) .

8. Procédé selon la revendication précédente, dans laquelle ledit nouveau secret (11, NEW_TOK) est mémorisé dans ledit terminal-client (13) après être chiffré (llter, NEW_TOK_KEKpin) avec une clé (7, KEKpin) dérivée d'un code PIN.

9. Système pour provisionner un nouveau secret (11, NEW_TOK) ou remplacer un premier secret (1) par ledit nouveau secret (11, NEW_TOK) dans un système de communication (12) comprenant :
- au moins un terminal client (13),
- un serveur d'authentification (15, 15A) et un serveur de provisionnement (14, 14A) de secret,
- un second secret (2) mémorisé au préalable dans ledit terminal et ledit serveur d'authentification,
ledit système étant configuré pour effectuer un provisionnement d'un nouveau secret (11, NEW_TOK) dans ledit terminal client (13) et/ou ledit serveur d'authentification (15, 15A),
**caractérisé en ce que** ledit système est configuré pour provisionner (E16) ledit nouveau secret (11, NEW_TOK) ou remplacer ledit premier secret 1, en étant préalablement chiffré (llbis) avec une clé de chiffrement (3) calculée avec ou étant basée sur ledit second secret (2).
